# FASCICULE DE BREVET EUROPEEN

(11) **EP 1 553 272 B1**
(45) Date de publication et mention de la délivrance du brevet: **22.11.2006**
(21) Numéro de dépôt: 05290015.6
(22) Date de dépôt: 05.01.2005
(51) Int. Cl.: F01N 3/20, F01N 3/08, F01N 11/00, F01N 7/14, F24J 1/00

(54) **Procédé et dispositif de gestion de la température d'un piège à NOx de ligne d'échappement d'un moteur**
Verfahren und Vorrichtung zur Kontrolle der Temperatur eines NOx-Speichers im Abgasstrang einer Brennkraftmaschine
Method and device for controlling the temperature of a NOx trap in an exhaust line of a motor vehicle engine

(30) Priorité: 08.01.2004 FR 0400140
(43) Date de publication de la demande: 13.07.2005
(73) Titulaire: Peugeot Citroën Automobiles S.A., 78140 Vélizy Villacoublay (FR)
(72) Inventeur: Lendresse, Yvane, 92500 Rueil-Malmaison (FR); Joubert, Emmanuel, 75014 Paris (FR); Boudard, Emmanuel, 78960 Voisins Le Bretonneux (FR)
(74) Mandataire: Neyret, Daniel Jean Marie

(56) Documents cités:
- EP-A- 0 878 610
- US-A- 4 991 644
- US-A- 5 653 106
- PATENT ABSTRACTS OF JAPAN vol. 017, no. 530 (M-1485), 24 septembre 1993 (1993-09-24) & JP 05 141228 A (HITACHI LTD), 8 juin 1993 (1993-06-08)

## Description

L'invention concerne le traitement des gaz d'échappement des moteurs à combustion interne. Elle concerne en particulier les procédés et dispositifs permettant de réduire les rejets à l'atmosphère des oxydes d'azote résultant de la combustion du carburant, essence ou gazole.

Les polluants issus de la combustion du carburant d'un moteur Diesel ou essence sont majoritairement des hydrocarbures imbrûlés, des oxydes d'azote NOx (monoxyde d'azote NO et dioxyde d'azote NO₂), des oxydes de carbone (monoxyde de carbone CO et dioxyde de carbone CO₂ et, dans le cas des moteurs Diesel et des moteurs essence à injection directe, des particules. Afin de respecter les normes environnementales internationales, la maîtrise des émissions d'hydrocarbures de CO, de NOx et de particules est impérative, et des technologies de post-traitement des gaz d'échappement sont indispensables.

La maîtrise des émissions gazeuses polluantes peut être obtenue par introduction dans la ligne d'échappement de catalyseurs spécifiques, comme par exemple les catalyseurs trois-voies pour les moteurs essence à injection indirecte ou injection directe fonctionnant à la stoechiométrie, ou les systèmes de pièges à oxydes d'azote, la catalyse SCR par NH₃ ou les catalyseurs DeNOx permanents utilisant les hydrocarbures comme réducteurs pour les moteurs Diesel et injection directe essence fonctionnant en mélange pauvre (excès d'oxygène dans les gaz d'échappement).

Dans le cas des moteurs fonctionnant en mélange pauvre, les pièges à NOx fonctionnent dans des gammes de températures étroites, ne permettant pas de couvrir toutes les conditions de fonctionnement des moteurs Diesel et essence à injection directe.

Ils sont sujets à un empoisonnement au soufre réduisant significativement, à terme, les performances du piège en endurance. Des phases de purge sont indispensables, et entraînent une sur-consommation. L'utilisation du piège à NOx est, enfin, conditionnée par la possibilité d'augmenter ponctuellement la richesse des gaz d'échappement qui traversent le piège à NOx.

La catalyse SCR, par utilisation de l'ammoniac comme agent réducteur, présente une efficacité de conversion des NOx sur cycle élevée, mais cette technologie impose l'embarquement dans le véhicule d'au moins un réservoir additionnel d'urée liquide (intermédiaire stable et non toxique générant du NH₃ à bord du véhicule) ou d'un composé solide de type urée ou carbamate d'ammonium.

Enfin, la catalyse DeNOx permanente, par action des hydrocarbures imbrûlés issus de la chambre de combustion sur les NOx, est encore peu utilisée car son efficacité sur cycle en conditions réelles est encore insuffisante pour respecter les normes internationales.

Dans le cas des pièges à NOx, leur formulation chimique est fondée sur des matériaux à base d'alcalins ou d'alcalino-terreux, comme par exemple le baryum, pour assurer la fonction de stockage du NO₂, et d'oxydes de métaux ou de métaux précieux, comme par exemple le platine, pour assurer la fonction d'oxydation du NO en NO₂, et par exemple le rhodium pour assurer la réduction des NO₂ en N₂. Ces différentes fonctions permettent d'assurer le fonctionnement du piège à NOx sur moteur avec des basculements de richesse, indispensables pour le stockage en mélange pauvre et le déstockage/réduction en condition riche (voir par exemple les brevets EP 0 580 389 et EP 0 560 991).

Les propriétés acido-basiques du composé d'alcalin ou d'alcalino-terreux conduisent à des réactions compétitives d'adsorption entre les oxydes d'azote qui a lieu entre 150 et 400°C (par formation par exemple de nitrate de baryum) et le dioxyde de soufre (par formation par exemple de sulfate de baryum). Les conditions thermiques de la désorption de ces composés sont plus contraignantes dans le cas des sulfates (températures > 700°C) que dans le cas des nitrates (températures > 250°C). La conséquence en est que les sulfates, par exemple de baryum, empoisonnent peu à peu tous les sites d'adsorption du matériau piège à NOx, en conduisant donc à une réduction importante de la capacité de stockage du piège à NOx.

L'accroissement de la température des gaz d'échappement est donc périodiquement nécessaire pour régénérer les composés du piège à NOx. Cet accroissement est actuellement réalisé soit par une post-injection unique de carburant dans la chambre de combustion, soit par une alternance de phases de fonctionnement riche et pauvre du moteur dans un temps assez court (procédé communément appelé « wobbling »).

Toutefois, dans certaines conditions (en ville par exemple) il n'est pas souhaitable d'élever la température des gaz d'échappement par ces méthodes, du fait de la surconsommation de carburant, de la dilution d'huile et de la dégradation de l'agrément de conduite qu'elles entraînent. Cela rend ainsi la zone de fonctionnement du piège étroite. De plus, le contrôle de la température procuré par ces méthodes est approximatif.

Il est connu par US-A-5 653 106 de générer de la chaleur pour chauffer rapidement des organes d'un véhicule au moment de son démarrage en injectant de l'eau dans un réacteur renfermant un oxyde d'élément alcalino-terreux. L'oxyde est ensuite régénéré par des moyens de chauffage.

Le but de l'invention est de procurer aux constructeurs automobiles un procédé et des moyens de régénération d'un piège à NOx efficaces, pouvant être utilisés dans toutes les conditions de fonctionnement du véhicule, ne nécessitant pas de modifications de la combustion et ne dégradant pas l'agrément de conduite.

A cet effet, l'invention a pour objet un procédé de gestion de la température d'un monolithe revêtu d'un catalyseur piège à NOx disposé sur la ligne d'échappement d'un moteur à combustion interne, caractérisé en ce que lorsqu'on désire augmenter la température dudit catalyseur, on lui communique la chaleur de réaction dégagée par l'hydratation réversible d'un oxyde métallique ou d'un mélange d'oxydes métalliques, et en ce que lorsqu'on veut diminuer la température dudit catalyseur, on y prélève de l'énergie thermique pour réaliser la réaction de déshydratation régénérant ledit oxyde métallique ou ledit mélange d'oxydes métallique.

Ledit oxyde métallique est, de préférence, choisi parmi CaO, SrO et BaO ou un mélange de ces oxydes.

L'invention a également pour objet un dispositif de gestion de la température d'un monolithe revêtu d'un catalyseur piège à NOx disposé sur la ligne d'échappement d'un moteur à combustion interne, caractérisé en ce qu'il comporte, connectés par des conduites de transport de l'eau à l'état liquide ou vapeur:
- un réservoir d'eau liquide ;
- une pompe prélevant l'eau dans le réservoir et l'envoyant dans un évaporateur pourvu de moyens d'apport de chaleur pour vaporiser l'eau prélevée par la pompe ;
- des moyens pour introduire la vapeur d'eau sortant de l'évaporateur dans une couche d'oxyde métallique susceptible de former un hydroxyde selon une réaction réversible ;
- des moyens pour transférer vers un condenseur, la vapeur d'eau s'échappant de la couche lors des phases de déshydroxydation de l'hydroxyde lesdits moyens incluant une vanne permettant de réguler la pression de vapeur d'eau au-dessus de la couche ;
- une pompe ramenant dans le réservoir l'eau condensée dans le condenseur;
- des moyens de mesure de la pression de vapeur d'eau au-dessus de la couche et de la température dans le monolithe, et des moyens pour commander le fonctionnement des pompes et de la vanne en fonction des données fournies par lesdits moyens de mesure ;
- et des moyens pour assurer les transferts thermiques entre le monolithe et la couche d'oxyde métallique susceptible de former un hydroxyde.

Ladite couche peut être disposée sur la surface extérieure du monolithe, ladite surface constituant lesdits moyens pour assurer les transferts thermiques.

Comme on l'aura compris, l'invention consiste à réaliser la régénération du piège à NOx par des échanges thermiques entre le piège à NOx et un oxyde métallique ou son hydroxyde, disposé de préférence au voisinage immédiat du piège à NOx. L'hydrolyse de l'oxyde, qui est exothermique, produit la chaleur nécessaire à la régénération du piège à NOx. Lorsque celle-ci est réalisée, on régénère l'oxyde métallique par une réaction de déshydratation endothermique inverse à la réaction d'hydrolyse ou d'hydratation. Cette déshydratation peut aussi être utilisée pour abaisser la température des gaz d'échappement lorsque celle-ci devient élevée au point de risquer de provoquer la dégradation du piège à NOx, ou de tout autre organe de post-traitement situé en aval du piège à NOx : catalyseur d'oxydation, catalyseur SCR, filtre à particules, organe unique regroupant plusieurs de ces fonctions...

L'invention sera mieux comprise à la lecture de la description qui suit, donnée en référence aux figures annexées suivantes :
- la figure 1 qui montre schématiquement en coupe transversale un exemple de piège à NOx selon l'invention,
- la figure 2 qui montre schématiquement un dispositif de gestion thermique du piège à NOx selon l'invention.

L'hydrolyse des oxydes métalliques est un phénomène exothermique, et donne lieu à la formation des hydroxydes métalliques correspondants. Cette réaction est réversible et la régénération endothermique de l'oxyde est possible si une quantité de chaleur suffisante est disponible. L'occurrence de ces réactions dépend également de la pression de vapeur d'eau, selon des courbes d'équilibre thermodynamique bien connues dans la littérature.

Les principaux couples oxyde/hydroxyde métalliques pouvant réagir selon une réaction du type

MO + H₂O ⇆ M (OH)₂ + ΔH

à des températures et à des pressions susceptibles de permettre leur utilisation dans le cadre de l'invention sont BaO/Ba(OH)₂, CaO/Ca(OH)₂, CdO/Cd(OH)₂, CoO/Co(OH)₂, CuO/Cu(OH)₂, FeO/Fe(OH)₂, MgO/Mg(OH)₂, MnO/Mn(OH)₂, NiO/Ni(OH)₂, SnO/Sn(OH)₂, SrO/Sr(OH)₂, ZnO/Zn(OH)₂. Les plus intéressants, car susceptibles de réagir avec l'eau à une température supérieure à 500°C pour des pressions raisonnables, sont BaO, CaO et SrO. En particulier, la chaux est avantageuse du fait de son faible coût. Elle réagit selon

CaO + H₂O + H₂O ⇆ Ca(OH)2 + 104 k J.mol⁻¹

t la réaction est possible à 500°C sous 1 bar ou à 700°C sous 20 à 30 bars de vapeur d'eau.

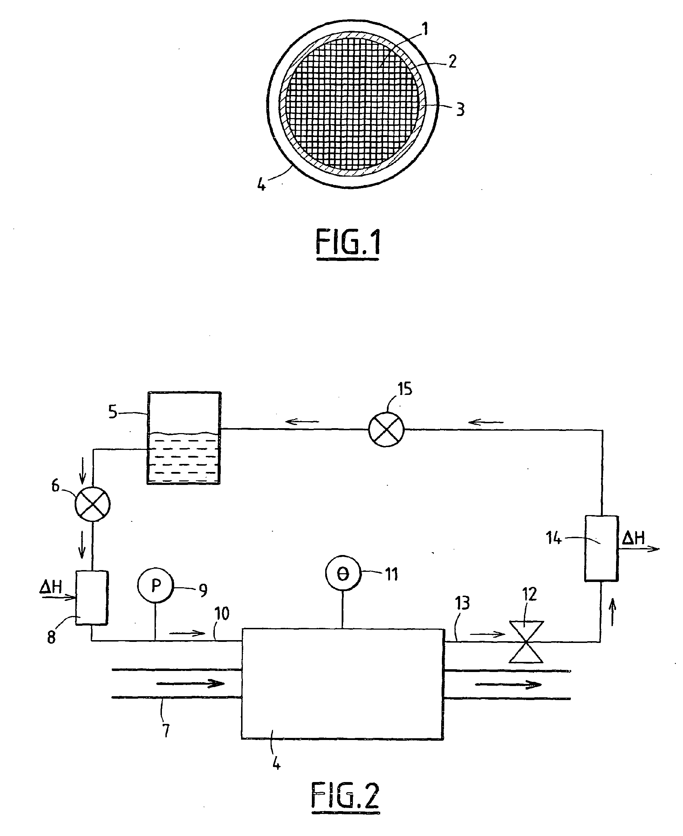

Sur la figure 1 est schématisé un exemple de piège à NOx selon l'invention. Il se présente, dans l'exemple représenté, sous la forme d'un monolithe 1 à structure en nid d'abeilles, généralement en céramique, dont les parois sont recouvertes d'un catalyseur piège à NOx utilisé classiquement à cet effet. Ce catalyseur peut comprendre notamment des composés à base de métaux alcalins ou alcalino-terreux (baryum par exemple), d'oxydes de métaux ou de métaux précieux tels que le platine, et de rhodium. Sur la paroi extérieure 2 du monolithe est déposée une couche 3 de CaO (ou d'un autre des oxydes cités précédemment ou d'un mélange de tels oxydes), dans laquelle des moyens non représentés permettent d'injecter de la vapeur d'eau lors des phases de fonctionnement exothermique, alors que des moyens non représentés permettent de recueillir la vapeur d'eau qui se dégage de la couche 3 lors des phases de fonctionnement endothermique. L'ensemble est contenu dans un boîtier 4.

Les autres éléments du dispositif selon l'invention, schématisés sur la figure 2, qui sont connectés par des conduites transportant l'eau à l'état liquide ou vapeur, sont les suivants :
- un réservoir d'eau liquide 5, dans lequel une pompe 6 prélève de l'eau lorsqu'une opération de régénération du filtre à NOx enfermé dans le boîtier 4 et placé sur la ligne d'échappement 7 doit être déclenchée ;
- un évaporateur 8 qui vaporise l'eau prélevée dans le réservoir 5 grâce à un apport de chaleur qui peut être assuré, notamment, par un dispositif à résistance électrique ou par des moyens d'échange thermique avec les gaz d'échappement circulant dans la ligne 7 ;
- un manomètre 9 de mesure de la pression de vapeur d'eau dans le piège à NOx et son environnement, disposé dans cet exemple sur la conduite 10 qui permet l'introduction de la vapeur d'eau dans la couche 3 revêtant la paroi 2 du piège 1 ;
- un capteur de température 11 qui mesure la température dans le piège à NOx ;
- une vanne 12 située sur la conduite 13 qui assure le transfert hors du boîtier 4 de la vapeur d'eau qui se dégage de la couche 3 ;
- un condenseur 14 qui condense cette vapeur d'eau par une extraction de chaleur qui peut être assurée par un simple refroidissement à l'air lorsque le véhicule roule ;
- une pompe 15 et ses conduites associées qui ramènent l'eau condensée dans le réservoir 5.

Grâce à ce dispositif, on peut soit augmenter la température à l'intérieur du piège à NOx 1, soit la diminuer.

Si une augmentation de la température est recherchée, il faut hydrater la couche 3. A cet effet, la pompe 6 envoie de l'eau dans l'évaporateur 8, et la vapeur d'eau qui en résulte est envoyée dans la couche de CaO 3. La vanne 12 permet de régler la pression de vapeur d'eau, mesurée par le manomètre 9, et la pression détermine la température obtenue, selon la courbe d'équilibre du couple CaO/Ca(OH)₂. Ainsi, pour une pression de l'ordre de 1 bar, on obtient une température de 500°C environ, que la couche 3 transmet au piège à NOx 1.

Si une diminution de la température est recherchée, après une hydratation de la couche 3, on provoque une déshydratation endothermique de la couche 3. La vanne 12 est ouverte pour régler la pression de vapeur d'eau à une valeur permettant cette déshydratation compte tenu de la température de la couche 3, et pour permettre la récupération de la vapeur d'eau qui se dégage de la couche 3. La vapeur d'eau est condensée dans le condenseur 14 puis réintroduite dans le réservoir 5. La quantité de chaleur récupérée, que la couche 3 prélève dans le piège à NOx 1, est proportionnelle à la quantité de vapeur d'eau récupérée.

De manière générale, une gestion du fonctionnement du piège à NOx 1 intégrant le dispositif selon l'invention peut être décrite ainsi.

On rappelle que l'utilisation d'un piège à NOx à base de métaux précieux et d'un ou de plusieurs éléments de stockage des NOx dans une ligne d'échappement d'un moteur fonctionnant en mélange pauvre implique des phases d'oxydation et de réduction.

Durant les phases d'oxydation (fonctionnement du moteur en mélange pauvre, c'est-à-dire en excès d'oxygène pendant une durée de 60 secondes environ), les réactions principales suivantes ont lieu sur le catalyseur :
- oxydation de NO en NO₂
- stockage de NO₂ sous forme de nitrate adsorbé (NO₃⁻) ;
- oxydation de CO en CO₂ ;
- oxydation des hydrocarbures, préférentiellement en CO₂ et H₂O, mais également en hydrocarbures partiellement oxydés.

Durant les phases riches (fonctionnement du moteur en riche, c'est-à-dire avec un déficit d'oxygène pendant une durée de quelques secondes) les réactions principales suivantes ont lieu sur le catalyseur :
- déstockage des nitrates adsorbés sous forme de NOx ;
- réduction de NOx par les réducteurs présents (CO, H₂ et hydrocarbures).

Ces alternances sont imposées sur toute la durée de vie du moteur et conditionnent le fonctionnement de tout autre élément catalytique également implanté dans la ligne d'échappement.

Le système de régulation de température des gaz d'échappement selon l'invention est mis en route en fonction de :
- la température des gaz à l'échappement (T_{échap}) ;
- la température des gaz désirées (T_{désir}).

Si T_{échap}< T_{désir}, le dispositif doit être capable de fournir de la chaleur au piège à NOx 1, et la réaction qui va se produire est la réaction d'hydrolyse de CaO (1).

Des exemples de cas où la réaction (1) est nécessaire sont :
- les phases riches de désorption et réduction des NOx en cycle urbain, par exemple, où des températures de l'ordre de 300°C sont requises pour assurer la conversion des NOx alors que la température des gaz est de l'ordre de 170°C,
- la phase de désulfatation où des températures de l'ordre de 700°C sont nécessaires.

Une régulation de la pression de la vapeur d'eau par la vanne 12 permet de choisir la gamme de températures obtenue.

Si T_{échap} > T_{désir}, le concept doit être capable de récupérer de la chaleur, abaissant ainsi la température des gaz au sein du monolithe. La réaction qui va se produire est la réaction de déshydratation de Ca(OH)₂ (2).

L'exemple typique de cas où la réaction (2) va se produire est la phase riche de désulfatation, durant laquelle il est conseillé de ne pas dépasser 700°C afin de ne pas dégrader thermiquement le piège. L'application de l'invention visera, dans ce cas, à ne pas dépasser la température limite de 700°C en refroidissant les gaz. Par la même occasion, on régénère le CaO de la couche 3.

Le procédé et le dispositif selon l'invention n'ont pas d'incidence sur le fonctionnement théorique du piège à NOx 1.

L'exemple non limitatif suivant montre l'impact de l'introduction de cette technique de production de température sur le dimensionnement d'un catalyseur piège à NOx utilisé en dépollution des gaz d'échappement. Pour un catalyseur de 6 pouces de longueur (soit 15.24cm) et de 5.5 pouces de diamètre (soit 13.97cm) représentant un volume total de 2.3 litres, une couche de CaO comprise entre 5 mm et 1cm permet d'atteindre les conditions thermiques nécessaires à une application sur un moteur à combustion interne. Cette couche correspond à un volume de CaO compris entre 0.35 litres et 0.72 litres selon le dimensionnement retenu et le besoin thermique strictement lié à l'application envisagée. Dans une application classique piège à NOx (hypothèse de volume de 2.31), la masse de matière active déposée sur les parois du support, préférentiellement en cordiérite, est comprise entre 230g et 460g selon les besoins de conversion en NOx recherchés, la cylindrée du moteur (directement connectée à la température des gaz d'échappement et aux débits gazeux traversant le monolithe piège à NOx)... La masse de CaO nécessaire pour obtenir une couche périphérique de 5mm à 1cm est comprise entre 120g et 240g environ, soit environ deux fois moins que la quantité de matière active pour la fonction piège à NOx.

Dans l'exemple qui a été décrit et représenté, la couche 3 de CaO/Ca(OH)₂ (matériaux dont on rappelle qu'ils ne sont qu'un des choix possibles) est disposée au contact même de la paroi extérieure 2 du monolithe piège à NOx 1, de sorte que les transferts thermiques s'effectuent par échange direct à travers la paroi 2. Mais on peut imaginer de placer la couche de CaO/Ca(OH)₂ à distance du monolithe 1 et de transférer la chaleur par un dispositif approprié tel qu'un caloduc.

Grâce à l'invention, on améliore la longévité du piège à NOx du fait que l'on évite ses surchauffes à des températures excessives pendant les étapes de régénération. De manière générale, la régénération du piège à NOx par réduction des nitrates et sulfates est effectuée de façon plus complète puisque les températures auxquelles elles s'effectuent peuvent être optimisées. La fenêtre de fonctionnement du piège à NOx peut être élargie à des conditions où une élévation de la température du piège n'était pas possible par les techniques antérieures fondées sur une augmentation de la température des gaz d'échappement. Enfin, la dilution d'huile est aussi diminuée du fait qu'on a remplacé tout ou partie de la post-injection qui était nécessaire pour élever la température durant les phases de désorption des NOx et de désulfatation.

L'invention est applicable à de multiples types de moteurs à combustion interne. Il trouve une application privilégiée aux cas des moteurs diesel et des moteurs essence à injection directe dont la ligne d'échappement peut comporter ou non, en plus d'un piège à NOx, un catalyseur d'oxydation situé en amont du piège à NOx et/ou un filtre à particules.

## Revendications

1. Procédé de gestion de la température d'un monolithe (1) revêtu d'un catalyseur piège à NOx disposé sur la ligne d'échappement (7) d'un moteur à combustion interne, **caractérisé en ce que** lorsqu'on désire augmenter la température dudit catalyseur, on lui communique la chaleur de réaction dégagée par l'hydratation réversible d'un oxyde métallique ou d'un mélange d'oxydes métalliques, et **en ce que** lorsqu'on veut diminuer la température dudit catalyseur, on y prélève de l'énergie thermique pour réaliser la réaction de déshydratation régénérant ledit oxyde métallique ou ledit mélange d'oxydes métalliques.

2. Procédé selon la revendication 1, **caractérisé en ce que** ledit oxyde métallique est choisi parmi CaO, SrO et BaO ou un mélange de ces oxydes.

3. Dispositif de gestion de la température d'un monolithe (1) revêtu d'un catalyseur piège à NOx disposé sur la ligne d'échappement (7) d'un moteur à combustion interne, **caractérisé en ce qu**'il comporte, connectés par des conduites de transport de l'eau à l'état liquide ou vapeur :
- un réservoir (5) d'eau liquide ;
- une pompe (6) prélevant l'eau dans le réservoir (5) et l'envoyant dans un évaporateur (8) pourvu de moyens d'apport de chaleur pour vaporiser l'eau prélevée par la pompe (6) ;
- des moyens pour introduire la vapeur d'eau sortant de l'évaporateur (8) dans une couche (3) d'oxyde métallique susceptible de former un hydroxyde selon une réaction réversible;
- des moyens pour transférer vers un condenseur (14) la vapeur d'eau s'échappant de la couche (3) lors des phases de déshydroxydation de l'hydroxyde, lesdits moyens incluant une vanne (12) permettant de réguler la pression de vapeur d'eau au-dessus de la couche (3) ;
- une pompe (15) ramenant dans le réservoir (5) l'eau condensée dans le condenseur (14);
- des moyens de mesure (9, 11) de la pression de vapeur d'eau au-dessus de la couche (3) et de la température dans le monolithe (1), et des moyens pour commander le fonctionnement des pompes (6, 15) et de la vanne (12) en fonction des données fournies par lesdits moyens de mesure (9, 11) ;
- et des moyens pour assurer les transferts thermiques entre le monolithe (1) et la couche (3) d'oxyde métallique susceptible de former un hydroxyde.

4. Dispositif selon la revendication 3, **caractérisé en ce que** ladite couche (3) est disposée sur la surface extérieure (2) du monolithe (1), ladite surface (2) constituant lesdits moyens pour assurer les transferts thermiques.

5. Dispositif selon la revendication 3 ou 4, **caractérisé en ce que** l'oxyde métallique constituant la couche (3) est choisi parmi CaO, SrO, BaO ou leurs mélanges.

## Claims

1. Method of managing the temperature of a monolith (1) coated with an NOx trap catalyst arranged in the exhaust line (7) of an internal combustion engine, **characterised in that**, when it is desired to increase the temperature of said catalyst, the reaction heat released by reversible hydration of a metallic oxide or of a mixture of metallic oxides is imparted thereto, and **in that**, when it is desired to reduce the temperature of said catalyst, thermal energy is removed therefrom to carry out the dehydration reaction which regenerates said metallic oxide or said mixture of metallic oxides.

2. Method according to claim 1, **characterised in that** said metallic oxide is selected from CaO, SrO and BaO or a mixture of those oxides.

3. Device for managing the temperature of a monolith (1) coated with an NOx trap catalyst arranged in the exhaust line (7) of an internal combustion engine, **characterised in that** it comprises, connected by conduits for transporting water in the liquid or vapour state:
- a reservoir (5) of liquid water;
- a pump (6) removing water from the reservoir (5) and transferring it to an evaporator (8) provided with heat-supplying means for vaporising the water removed by the pump (6);
- means for introducing the water vapour leaving the evaporator (8) into a layer (3) of metallic oxide capable of forming a hydroxide by means of a reversible reaction;
- means for transferring to a condenser (14) the water vapour escaping from the layer (3) during phases of dehydroxydation of the hydroxide, said means including a valve (12) allowing regulation of the water vapour pressure above the layer (3);
- a pump (15) returning to the reservoir (5) the water condensed in the condenser (14);
- means for measuring (9, 11) the water vapour pressure above the layer (3) and the temperature in the monolith (1), and means for controlling operation of the pumps (6, 15) and of the valve (12) as a function of the data provided by said measuring means (9, 11);
- and means for ensuring thermal transfers between the monolith (1) and the layer (3) of metallic oxide capable of forming a hydroxide.

4. Device according to claim 3, **characterised in that** said layer (3) is arranged on the outer surface (2) of the monolith (1), said surface (2) comprising said means for ensuring thermal transfers.

5. Device according to claim 3 or 4, **characterised in that** the metallic oxide comprising the layer (3) is selected from CaO, SrO, BaO or mixtures thereof.

## Patentansprüche

1. Verfahren zur Steuerung der Temperatur eines Monolithen (1), der mit einem NOx einfangenden Katalysator umhüllt ist, der in der Abgasstrecke (7) eines Verbrennungsmotors angeordnet ist, **dadurch gekennzeichnet, dass**, wenn man die Temperatur des Katalysators erhöhen möchte, man ihm die Reaktionswärme zuführt, die durch die reversible Hydratation eines Metalloxids oder einer Mischung von Metalloxiden freiwird, und, wenn man die Temperatur des Katalysators senken möchte, ihm Wärmeenergie entnimmt, um die das Metalloxid oder die Mischung von Metalloxiden regenerierende Dehydratationsreaktion durchzuführen.

2. Verfahren nach Anspruch 1, **dadurch gekennzeichnet, dass** das Metalloxid aus CaO, SrO und BaO oder einer Mischung dieser Oxide ausgewählt ist.

3. Vorrichtung zur Steuerung der Temperatur eines Monolithen (1), der mit einem NOx einfangenden Katalysator umhüllt ist, der in der Abgasstrecke (7) eines Verbrennungsmotors angeordnet ist, **dadurch gekennzeichnet, dass** sie folgende durch Leitungen zur Beförderung von Wasser in flüssigem oder dampfförmigem Zustand verbundene Elemente umfasst:
- einen Behälter (5) für flüssiges Wasser;
- eine Pumpe (6), die in dem Behälter (5) Wasser entnimmt und es in einen Verdampfer (8) befördert, der mit Wärmezufuhrmitteln zum Verdampfen des von der Pumpe (6) entnommenen Wassers versehen ist;
- Mittel zum Einführen des aus dem Verdampfer (8) austretenden Wassers in eine Schicht (3) aus einem Metalloxid, das in einer reversiblen Reaktion ein Hydroxid bilden kann;
- Mittel zum Übertragen des Wasserdampfs, der in den Phasen der Dehydroxidation des Hydroxids aus der Schicht (3) austritt, zu einem Kondensator (14), wobei diese Mittel ein Ventil (12) einschließen, das die Regulierung des Wasserdampfdrucks über der Schicht (3) gestattet;
- eine Pumpe (15), die das in dem Kondensator (14) kondensierte Wasser in den Behälter (5) zurückbringt;
- Mittel (9, 11) zum Messen des Wasserdampfdrucks über der Schicht (3) und der Temperatur im Monolithen (1) und Mittel zum Steuern des Betriebs der Pumpen (6, 15) und des Ventils (12) in Abhängigkeit von Daten, die von diesen Messmitteln (9, 11) geliefert werden;
- und Mittel zum Gewährleisten der Wärmeübertragungen zwischen dem Monolithen (1) und der Schicht (3) aus Metalloxid, das ein Hydroxid bilden kann.

4. Vorrichtung nach Anspruch 3, **dadurch gekennzeichnet, dass** die Schicht (3) auf der Außenfläche (2) des Monolithen (1) angeordnet ist, die die Mittel zum Gewährleisten der Wärmeübertragungen bildet.

5. Vorrichtung nach Anspruch 3 oder 4, **dadurch gekennzeichnet, dass** das die Schicht (3) bildende Metalloxid aus CaO, SrO, BaO oder ihren Mischungen ausgewählt ist.
